# EUROPEAN PATENT SPECIFICATION

(11) **EP 3 230 408 B1**
(45) Date of publication and mention of the grant of the patent: **05.02.2020**
(21) Application number: 15804756.3
(22) Date of filing: 02.12.2015
(51) Int. Cl.: C10G 2/00, B01J 37/18, B01J 21/06, B01J 23/75

(54) **FISCHER-TROPSCH PROCESS USING REDUCTIVELY-ACTIVATED COBALT CATALYST**
FISCHER-TROPSCH-VERFAHREN UNTER VERWENDUNG EINES REDUKTIV-AKTIVIERTEN KOBALTKATALYSATORS
PROCÉDÉ DE FISCHER-TROPSCH À L'AIDE D'UN CATALYSEUR AU COBALT ACTIVÉ PAR RÉDUCTION

(30) Priority: 12.12.2014 EP 14197760
(43) Date of publication of application: 18.10.2017
(73) Proprietor: BP P.L.C., London SW1Y 4PD (GB)
(72) Inventor: FERGUSON, Ewen, Hull Yorkshire HU12 8DS (GB); OJEDA PINEDA, Manuel, Hull Yorkshire HU12 8DS (GB); PATERSON, Alexander, Hull Yorkshire HU12 8DS (GB); WELLS, Matthew James, Hedon East Yorkshire HU12 8DS (GB)
(74) Representative: BP Global Patents
(86) International application number: PCT/EP2015/078422
(87) International publication number: WO 2016/091697

(56) References cited:
- EP-A2- 0 266 898
- US-A- 4 595 703
- US-A- 5 981 608
- US-A- 6 130 184

## Description

This invention relates to Fischer-Tropsch (FT) processes for the conversion of a feed comprising a mixture of carbon monoxide gas and hydrogen gas (e.g. synthesis gas (syngas)) to hydrocarbons over a cobalt catalyst comprising a titanium dioxide (titania) support, catalysts therefor and uses of/processes to produce said catalysts.

Known FT processes typically utilise a stable catalyst composition comprising oxidic cobalt, such as cobalt(II) dicobalt(III) oxide (also known as cobalt oxide or cobalt(II,III) oxide, i.e. Co₃O₄) which may be supported on titanium dioxide, and employ a reduction step in order to activate the catalyst by reducing the cobalt(II,III) oxide to elemental (or metallic) cobalt (Co⁰) which is understood to be the catalytically active species. It has thus been thought desirable to reduce as much of the cobalt present as possible in order to improve the activity of the resultant catalyst, requiring harsh conditions, such as high temperature. See Batholomew et al, Journal of Catalysis 128, 231-247 (1991). US7851404 discloses an FT process utilising a reduced cobalt catalyst comprising a titanium dioxide support and a hydrogen reduction step, exemplifying a reduction temperature of 425°C.

US 5,981,608 discloses a catalyst for use in a process for the preparation of hydrocarbons comprising cobalt and manganese and/or vanadium, supported on a carrier, wherein the cobalt:(manganese+vanadium) atomic ratio is at least 12:1; preferably, the cobalt:(manganese+vanadium) atomic ratio is at most 1500:1. US 5,981,608 further discloses a process for the preparation of hydrocarbons which comprises contacting a mixture of hydrogen and carbon monoxide at elevated temperature and pressure with a catalyst as described therein.

US 6,130,184 discloses a process for the preparation of a cobalt-containing catalyst or catalyst precursor, comprising (a) mixing (1) titania or a titania precursor, (2) a liquid, and (3) a cobalt compound, which is at least partially insoluble in the amount of liquid used, to form a mixture, (b) shaping and drying of the mixture thus-obtained, and (c) calcination of the composition thus-obtained. US 6,130,184 also discloses a catalyst or catalyst precursor obtainable by the process as defined, and a process for the preparation of hydrocarbons comprising contacting a mixture of carbon monoxide and hydrogen with the catalyst as defined.

US 4,595,703 discloses a process wherein an admixture of carbon monoxide and hydrogen is contacted over a cobalt catalyst, especially a thoria promoted cobalt catalyst, formed by dispersing the cobalt, or cobalt and thoria, upon a titania or titania-containing support wherein the titania support is one having a rutile:anatase ratio of at least about 2:3, and preferably at least about 3:2 to produce, at reaction conditions, a distillate fuel constituted principally of an admixture of linear paraffin and olefins, particularly a C10+ distillate which can be further refined and upgraded to high quality fuels, and other products such as mogas, diesel fuel, jet fuel, lubes and specialty solvents, particularly premium middle distillate fuels of carbon numbers ranging from about C10 to about C20. EP 0 266 898 A2 discloses a catalyst composition comprised of a particulate metal compound dispersed, alone or with a metal promoter, as a thin catalytically active film upon a particulate support, the film thickness being determined to maximize CO conversion and minimize methane conversion in a hydrocarbon synthesis reaction. EP 0 266 898 A2 also discloses the preparation of the catalyst and its use in a process to convert carbon monoxide and hydrogen to a distillate fuel.

However, there remains an ongoing need to improve FT processes, including improving or maintaining the properties of FT catalysts, most notably in relation to their activity, i.e. enabling greater conversion of syngas to hydrocarbons for the same temperature (or equal conversion at lower temperatures) and enabling more desirable selectivity, such as selectivity towards producing hydrocarbons having at least 5 carbon atoms (C₅₊), or selectivity away from producing methane, especially when operating the overall process with less energy intensive conditions (e.g. lower temperature). Surprisingly, it has now been found that, provided a hydrogen gas reduction step is used, milder reduction conditions (e.g. lower temperature) may be utilised while still achieving at least acceptable, and even enhanced, catalyst activity and C₅₊ selectivity in an FT process.

According to a first aspect, the present invention thus relates to a process for the conversion of a feed comprising a mixture of hydrogen and carbon monoxide to hydrocarbons, the hydrogen and carbon monoxide in the feed being present in a ratio of from 1:9 to 9:1 by volume, the process comprising the steps of: pre-treating a catalyst composition comprising titanium dioxide support and oxidic cobalt or a cobalt compound decomposable thereto, for a period of from 1 to 50 hours, with a hydrogen gas-containing stream comprising less than 10% carbon monoxide gas by volume of carbon monoxide gas and hydrogen gas, to form a reductively-activated catalyst; and contacting the feed at elevated temperature and atmospheric or elevated pressure with the reductively-activated catalyst; wherein the step of pre-treating the catalyst composition is conducted within a temperature range of from 200°C to less than 300°C, preferably from 220°C to 280°C, more preferably from 250°C to 270°C.

As used herein, the general term "cobalt" includes cobalt either in metallic (elemental) form or as part of a cobalt compound (i.e. referring to the total cobalt present), so for example where the catalyst is referred to as "comprising cobalt", it is intended to mean that the catalyst comprises metallic/elemental cobalt and/or at least one cobalt compound. Commensurately, the mass of cobalt includes the total mass of cobalt atoms and ions present, i.e. ignoring any other ions in any cobalt compounds. As used herein, the more specific terms "metallic cobalt" or "elemental cobalt" mean cobalt in an oxidation state of zero, i.e. Co⁰. It is also recognised that exposing the catalyst to the feed itself at elevated temperature may further reductively-activate the catalyst. However, even if further reduction of the catalyst occurs upon, or following exposure to the feed, it has been found that the benefits of the present invention remain, and accordingly this is specifically included within the scope of the present invention.

The catalyst employed in the present invention may be obtained by pre-treating a catalyst composition comprising titanium dioxide support and oxidic cobalt or a cobalt compound decomposable thereto, with a reducing agent. Accordingly, a pre-treatment, or reduction step, may be used to obtain the degree of reduction, i.e. by reducing the catalyst.

Suitably,a pre-treatment step which may be a gaseous reduction, i.e. using a reducing gas stream, may be employed. If a reducing gas stream is used, it advantageously comprises at least 25 vol.% of a reducing gas, preferably at least 50 vol.% of a reducing gas, more preferably at least 75 vol.% reducing gas, even more preferably at least 90 vol.% reducing gas, even more preferably still at least 95 vol.% reducing gas and yet further preferably is substantially entirely made up of reducing gas. Any remainder may comprise, or be, inert diluents such as argon, helium, nitrogen and/or water vapour, or minor components such as hydrocarbons (e.g. methane) or carbon dioxide. The reducing gas referred to in the present invention is molecular hydrogen (H₂), also known as hydrogen gas.

As hydrogen gas is being utilised, it is suitable that the reducing gas stream comprises less than 10% carbon monoxide gas (by volume of hydrogen gas and carbon monoxide gas) in order to prevent premature reaction start-up and a resultant poorly performing catalyst. For the avoidance of any doubt, the upper limit of carbon monoxide which may be present in the reducing gas as reported herein is relative only to the volume of molecular hydrogen in the gaseous stream, and not relative to the combined volume of hydrogen and any inert diluents or other components.

Suitably, the pre-treating step may be performed at any desired pressure, for instance a pressure (e.g. feed pressure) from 10 to 5500 kPa, preferably from 20 to 3000 kPa, more preferably from 50 to 1000 kPa, and even more preferably from 100 to 800 kPa. During this step, reducing gas (i.e. comprisng or being hydrogen gas) is suitably passed over the catalyst bed at a gas hourly space velocity (GHSV) in the range from 100 to 10000 h⁻¹, preferably from 250 to 5000 h⁻¹, such as from 250 to 3000 h⁻¹ and more preferably from 250 to 2000 h⁻¹, for example 1000 h⁻¹. As used herein, unless otherwise specified, GHSV means gas hourly space velocity on gas volumes converted to standard temperature and pressure based on the catalyst bed volume.

The pre-treating step of reducing a catalyst advantageously occurs at a temperature of from 200°C to less than 300°C or from 220°C to less than 300°C, preferably from 220°C to 280°C or from 220°C to 250°C, more preferably from 230°C to 250°C, such as 240°C. Alternatively, the pre-treating step of reducing a catalyst advantageously may occur at a temperature of from 250°C to less than 300°C, from 250°C to 280°C or from 250°C to 270°C, such as 260°C. These temperature ranges particularly apply (non-exclusively) when the catalyst composition and/or reductively-activated catalyst comprises certain levels of promoter as will be discussed later. As used herein, temperatures may refer to feed temperatures, applied temperatures and/or catalyst bed temperatures and may particularly be catalyst bed temperatures.

The precise duration of the pre-treatment step is also important to the present invention. Exemplary durations of the pre-treatment step, which may be in combination with any of the temperature ranges specified above, include from 1 to 50 hours, preferably from 5 to 35 hours, more preferably from 7 to 20 hours, and even more preferably from 10 to 15 hours.

For convenience, the pre-treatment step may desirably occur in the same reactor used for the subsequent conversion of syngas to hydrocarbons ("in situ") in order to reduce the time and effort required loading and unloading catalysts. Reducing in situ also mitigates the need for any steps to ensure the degree of reduction achieved during the pre-treatment step remains present when the conversion of syngas to hydrocarbons is commenced. The pre-treatment step may, however, also be carried out in another location apart from the FT reactor ("ex situ").

The complete reduction of cobalt oxide (Co₃O₄) is a two-step process (firstly the reduction to cobalt(II) oxide, also known as cobaltous oxide, and then the reduction of cobalt(II) oxide to metallic cobalt) as shown by the chemical equations below:

Co₃O₄ + H₂ → 3CoO + H₂O

CoO + H₂ → Co⁰ + H₂O

Equations 1 and 2: Step-wise reduction of cobalt(II,III) oxide to metallic cobalt

The overall reduction may alternatively be represented as a single stoichiometric equation:

Co₃O₄ + 4H₂ → 3CoO + H₂O + 3H₂ → 3Co⁰ + 4H₂O

Equation 3: Overall reduction of cobalt(II,III) oxide to metallic cobalt

To prevent the pre-treated catalyst being found to be more poorly performing following any period in storage, transport or other intermediate steps that may occur before the catalyst is used to produce hydrocarbons, (e.g. via re-oxidation), additional measures may be taken, for example avoiding exposure of the catalyst to an oxidising atmosphere during storage and transport. Such avoidance of oxidising atmospheres may be achieved by packing the catalyst in an inert (e.g. nitrogen) atmosphere, packing the catalyst in a reducing atmosphere (e.g. 5% H₂, 95% nitrogen by volume), passivating by creating a thin, protective oxide layer on the surface of the catalyst, or wax-coating the catalyst. These measures may especially be taken prior to any storage and/or transport.

The catalyst used in accordance with the present invention may comprise a cobalt compound intended to be reduced to metallic cobalt. The identity of the cobalt compound is not particularly limited except that the cobalt compound should be decomposable (either directly or indirectly (e.g. via intermediates) to metallic cobalt, including mixtures of such compounds. Preferably, the cobalt compound is oxidic cobalt, a cobalt compound decomposable thereto or mixtures thereof, for example cobalt(III) oxide, cobalt(II,III) oxide, and/or cobalt(II) oxide, compounds decomposable to cobalt(III) oxide, cobalt(II,III) oxide, and/or cobalt(II) oxide, and mixtures thereof. More preferably, the cobalt compound is cobalt(II,III) oxide, cobalt(II) oxide, a cobalt compound that is decomposable to cobalt(II,III) oxide and/or cobalt(II) oxide, or mixtures thereof, for example cobalt(II,III) oxide, cobalt(II) oxide, cobalt nitrate (e.g. cobalt nitrate hexahydrate), cobalt acetate or cobalt hydroxide. Even more preferably, the cobalt compound is cobalt(II,III) oxide, cobalt(II) oxide or mixtures thereof, as this removes the need for additional calcination/oxidation/decomposition steps to prepare the oxide, and even more preferably still the cobalt compound is cobalt(II,III) oxide. If a cobalt compound other than oxidic cobalt is used, this may be referred to herein as a catalyst precursor, from which the calcination/oxidation/decomposition step used to form cobalt oxide may be carried out in situ or ex situ with respect to the hydrocarbon synthesis reactor or with respect to the reduction step.

The amount of cobalt compound present in the catalyst is not particularly limited. According to some embodiments of the present invention, the catalyst comprises from 5% to 30%, preferably from 5% to 25% and more preferably from 10% to 20%, cobalt compound by weight of the catalyst.

The catalyst also comprises titanium dioxide (also referred to herein as titania) as a supporting material for the cobalt compound. The catalyst may further comprise one or more promoters in order to improve the activity of the catalyst. Non-limiting examples of promoters include: chromium, nickel, iron, molybdenum, tungsten, manganese, boron, zirconium, gallium, thorium, lanthanum, cerium, ruthenium, rhodium, rhenium, palladium, platinum and/or mixtures thereof. The one or more promoters may be present as the elemental metal or as a compound, for example an oxide. In some embodiments, the promoter comprises, or is selected from platinum, molybdenum or mixtures thereof, for example molybdenum. Such promoters may be present in an amount up to 15% by weight of the catalyst but may be advantageously present in an amount of from 0% to 5% by weight of the catalyst, from 0.1% to 3% by weight of the catalyst, or from 0.5% to 2.5% by weight of the catalyst. Particular examples (for example manganese) may be from 1% to 2.5% or from 1.5% to 2.25%, for example 2%. As mentioned earlier, each promoter weight range above may particularly apply in combination with temperature ranges of the pre-treatment step such as from 220°C to 280°C, preferably from 220°C to 250°C and more preferably from 230°C to 250°C, such as 240°C in order to further improve catalyst performance in respect of activity and C₅₊ selectivity. Alternative amounts of promoter (e.g. manganese) that may be used include from 0.1% to 1.5%, from 0.5% to 1.5%, from 0.75% to 1.25% or from 0.8% to 1.2%, such as 1%, especially in combination with temperature ranges of the pre-treatment step such as from 250°C to less than 300°C, preferably from 250°C to 280°C and more preferably from 250°C to 270°C, such as 260°C, in order to obtain an enhanced balance overall catalyst performance while being able to use milder pre-treatment conditions.

The catalyst may be prepared by any known method, including impregnation, precipitation or gelation. A suitable method, for example, comprises impregnating titanium dioxide with a compound of cobalt that is thermally decomposable to metallic cobalt (e.g. via the oxide), such as cobalt nitrate, cobalt acetate or cobalt hydroxide. Any suitable impregnation technique including the incipient wetness technique or the excess solution technique, both of which are well-known in the art, may be employed. The incipient wetness technique is so-called because it requires that the volume of impregnating solution be predetermined so as to provide the minimum volume of solution necessary to just wet the entire surface of the support, with no excess liquid. The excess solution technique as the name implies, requires an excess of the impregnating solution, the solvent being thereafter removed, usually by evaporation. The impregnation solution may suitably be either an aqueous solution or a nonaqueous, organic solution of the cobalt compound. Suitable nonaqueous organic solvents include, for example, alcohols, ketones, liquid paraffinic hydrocarbons and ethers. Alternatively, aqueous organic solutions, for example an aqueous alcoholic solution, of the thermally decomposable cobalt compound may be employed.

Following preparation, the catalyst may also be formed by any known technique including extrusion, pulverisation, powderisation, pelletisation, granulation and/or coagulation. Preferably, the catalyst is extruded, for example to enable less pressure drop in a reactor and highly consistent diameter of the catalyst. In extrusion, an extrudable paste may be formed, such as from a mixture of the catalyst components in water, which is then extruded into the desired shape and dried to form the catalyst. Alternatively, an extrudable paste of titanium dioxide may be formed from a mixture of powdered titanium dioxide and water. This paste may then be extruded and typically dried and/or calcined to form the desired shape, which may then be contacted with a solution of a cobalt compound in order to impregnate the extruded support material with the cobalt compound. The resultant impregnated support material may then be dried to form the catalyst, which if not already comprising oxidic cobalt such as cobalt(III) oxide, cobalt(II,III) oxide or cobalt(II) oxide may also be calcined.

As indicated above, the present invention provides, in a first aspect, a process for the conversion of a feed comprising a mixture of hydrogen and carbon monoxide, preferably in the form of a synthesis gas mixture, to hydrocarbons, which process comprises contacting the feed with a reductively activated catalyst composition as hereinbefore described.

In the hydrocarbon synthesis processes described herein, the volume ratio of hydrogen to carbon monoxide (H₂:CO) in the feed is in the range of from 1:9 to 9:1 preferably in the range of from 0.5:1 to 5:1, more preferably from 1:1 to 3:1, and most preferably from 1.6:1 to 2.2:1. Such ratios especially apply as regards the feed to the reactor, e.g. at the reactor inlet. The feed may also comprise other gaseous components, such as nitrogen, carbon dioxide, water, methane and other saturated and/or unsaturated light hydrocarbons, each preferably being present at a concentration of less than 30% by volume. The temperature of the reaction (or reactor) is elevated, preferably in the range from 100 to 400 °C, more preferably from 150 to 350 °C, and most preferably from 150 to 250 °C. The pressure of the reaction (or reactor) is atmospheric or elevated, preferably in the range from 1 to 100 bar (from 0.1 to 10 MPa), more preferably from 5 to 75 bar (from 0.5 to 7.5 MPa), and most preferably from 10 to 50 bar (from 1.0 to 5 .0 MPa). As used herein "elevated" in relation to conditions refers to conditions greater than standard conditions, for example, temperatures and pressures greater than standard temperature and pressure (STP).

The gaseous reactants (feed) for the present process may be fed into the reactor either separately or pre-mixed (e.g. as in the case of syngas). They may initially all contact the solid catalyst at the same portion of the solid catalyst, or they may be added at different positions of the solid catalyst. The ratio of hydrogen gas to carbon monoxide gas may thus be determined from the relative flow rates when both streams are flowing. Preferably, the one or more gaseous reactants flow co-currently over the solid catalyst.

The feed used for the present process may also comprise recycled materials extracted from elsewhere in the process, such as unreacted reactants separated from any reduction steps associated with the process of the invention.

The mixture of hydrogen and carbon monoxide is suitably passed over the catalyst bed at a gas hourly space velocity (GHSV) in the range from 100 to 10000 h⁻¹ (gas volumes converted to standard temperature and pressure), preferably from 250 to 5000 h⁻¹, such as from 250 to 3000 h⁻¹, and more preferably from 250 to 2000 h⁻¹.

As is well known in the art, synthesis gas, which is preferably used as the feed for the present process, principally comprises carbon monoxide and hydrogen and possibly also minor amounts of carbon dioxide, nitrogen and other inert gases depending upon its origin and degree of purity. Methods of preparing synthesis gas are established in the art and usually involve the partial oxidation of a carbonaceous substance, e.g. coal. Alternatively, synthesis gas may be prepared, for example by the catalytic steam reforming of methane. The ratio of carbon monoxide to hydrogen present in the synthesis gas may be altered appropriately by the addition of either carbon monoxide or hydrogen, or may be adjusted by the so-called shift reaction well known to those skilled in the art.

The process of the invention may be carried out batch wise or continuously in a fixed bed, fluidised bed or slurry phase reactor. When using the catalyst as described in the present invention in a fixed bed process, the particle size should be of such shape and dimension that an acceptable pressure drop over the catalyst bed is achieved. A person skilled in the art is able to determine the particle dimension optimal for use in such fixed bed reactors. Particles of the desired shape and dimension may be obtained by extrusion of a paste to which optionally extrusion aids and/or binders may be optionally added.

In a second aspect, the present invention also provides a product (preferably a fuel) comprising hydrocarbons obtained from a process according to the first aspect. As the product results from a process for the conversion of a feed comprising a mixture of hydrogen gas and carbon monoxide gas to hydrocarbons (to which the first aspect of the invention relates), any features of the process described above in relation to the first aspect are applicable to this second aspect, either individually or in any combination.

According to third, fourth and fifth aspects, the present invention relates to a process for making a Fischer-Tropsch catalyst comprising the step of: treating a catalyst composition comprising titanium dioxide support, and oxidic cobalt or a cobalt compound decomposable thereto, for a period of from 1 to 50 hours, with a hydrogen gas-containing stream comprising less than 10% carbon monoxide gas by volume of carbon monoxide gas and hydrogen gas, to form the Fischer-Tropsch catalyst, wherein the step of treating the catalyst composition is conducted within a temperature range of from 200°C to less than 300°C, preferably from 220°C to 280°C, more preferably from 250°C to 270°C, the catalysts so produced, and the use of said catalysts in a process for the conversion of a feed comprising a mixture of hydrogen gas and carbon monoxide gas to hydrocarbons. As these aspects each relate to a process for the conversion of a feed comprising a mixture of hydrogen gas and carbon monoxide gas to hydrocarbons (to which the first aspect of the invention relates), any features of the process described above in relation to the first aspect are applicable to these third, fourth and/or fifth aspects, either individually or in any combination.

### Examples

### Examples 1-4

Cobalt oxide supported on titanium dioxide was manufactured as a catalyst by impregnating titanium dioxide powder with an aqueous solution of cobalt nitrate hexahydrate, followed by extrusion of the formed paste, and then drying and calcining to yield catalyst extrudates with a cobalt loading of 10% by weight of catalyst and a manganese loading of 1% by weight of catalyst. The catalyst sample was thus cobalt oxide on titanium dioxide support, 10 wt.% cobalt loading, 1 wt.% manganese loading. 9.6g of catalyst sample was loaded into a metal liner of a multi-channel catalyst-screening microreactor. Each channel of the microreactor underwent the same drying procedure in parallel, before the catalysts were activated according to the following protocols under 100% H₂ gas at a GHSV of 3800 h⁻¹ and pressure of 1 atm:
Example 1 (comparative): From room temperature ramped to 150 °C at a rate of 2°C/min, then ramped to 200 °C at a rate of 1°C/min, before dwelling at 200°C for 15 hours.
Example 2 (inventive): From room temperature ramped to 150 °C at a rate of 2°C/min, then ramped to 240 °C at a rate of 1°C/min, before dwelling at 240°C for 15 hours.
Example 3 (comparative): From room temperature ramped to 150 °C at a rate of 2°C/min, then ramped to 260 °C at a rate of 1°C/min, before dwelling at 260°C for 15 hours.
Example 4 (comparative): From room temperature ramped to 150 °C at a rate of 2°C/min, then ramped to 300 °C at a rate of 1°C/min, before dwelling at 300°C for 15 hours.

The liners were then cooled, purged with nitrogen, and temperature ramped identically under a 1.8:1 H₂:CO molar stream of syngas in 18% N₂ at 30 barg total pressure at a GHSV of 1250 h⁻¹. Each example was operated at a temperature of 201-214°C in order to achieve the same level of conversion, under identical operating conditions with results presented in Table 1. The data for the inventive example shows acceptable selectivity to C₅₊ and CH₄ alongside a similar temperature to reach the same CO conversion rate versus comparative example 4, despite the milder reduction conditions. Example 3 also shows improved selectivity to C₅₊ and CH₄ alongside a lower temperature to reach the same CO conversion rate versus example 2. Furthermore, Example 3 actually demonstrates a relatively small loss of C5+ selectivity versus example 4 despite a 40°C drop in activation temperature, while a much more significant loss of C5+ selectivity is seen between example 3 and example 2 with only a 20°C drop in activation temperature. This steeper loss of C5+ selectivity is then maintained to example 1.

**Table 1. Performance data of examples 1-4 in conversion of syngas to hydrocarbons**

| Example | 1 | 2 | 3 | 4 |
|---|---|---|---|---|
| Pre-reduction Temperature (°C) | 200 | 240 | 260 | 300 |
| GHSV (h⁻¹) | 1250 | 1250 | 1250 | 1250 |
| Temperature (°C) | 214 | 201 | 200 | 198 |
| CO Conversion (%) | 67 | 65 | 65 | 65 |
| C₅₊ Selectivity (%) | 74.8 | 81.8 | 85.0 | 86.8 |
| CH₄ Selectivity (%) | 15.0 | 10.8 | 8.9 | 7.4 |

### Examples 5-7

The catalyst sample was cobalt oxide on titanium dioxide support, 10 wt.% cobalt loading, 2 wt.% manganese loading. Each catalyst sample (mass provided in Table 2) was loaded into a metal liner of a multi-channel catalyst-screening microreactor. Each channel of the microreactor underwent the same drying procedure in parallel, before the catalysts were activated according to the following protocols under 100% H₂ gas at a GHSV 3800 h⁻¹ and pressure of 1 atm:
From room temperature, ramped to 150 °C at a rate of 2°C/min, then ramped to 240 °C (example 5), 260 °C (example 6, comparative) or 300 °C (example 7, comparative) at a rate of 1°C/min, before dwelling at this final temperature for 15 hours.
The liners were then cooled, purged with nitrogen, and temperature ramped identically under a 1.8:1 H₂:CO molar stream of syngas in 18% N₂ at 30 barg total pressure and a GHSV of 1250 h⁻¹. Each example was operated at a temperature of 195°C under identical operating conditions with results presented in Table 3. The data for example 5 clearly shows improved selectivity to C₅₊ and similar selectivity to CH₄ alongside similar temperatures to reach the same CO conversion rate versus example 7, despite the milder reduction conditions leading to a lower degree of reduction, and even despite a lower mass of catalyst having been used, indicating improved activity. Similarly, example 6 provides comparable performance to example 7 despite less catalyst having been used.

**Table 2. Performance data of examples 5-7 in conversion of syngas to hydrocarbons**

| Example | 5 | 6 | 7 |
|---|---|---|---|
| Mass of Catalyst (g) | 8.6 | 8.8 | 9.4 |
| Pre-reduction Temperature (°C) | 240 | 260 | 300 |
| GHSV (h⁻¹) | 1250 | 1250 | 1250 |
| Temperature (°C) | 204 | 206 | 203 |
| CO Conversion (%) | 64 | 64 | 63 |
| C₅₊ Selectivity (%) | 83.7 | 81.0 | 82.5 |
| CH₄ Selectivity (%) | 9.3 | 10.1 | 9.2 |

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A process for the conversion of a feed comprising a mixture of hydrogen and carbon monoxide to hydrocarbons, the hydrogen and carbon monoxide in the feed being present in a ratio of from 1:9 to 9:1 by volume, the process comprising the steps of :
a. pre-treating a catalyst composition comprising:
i. titanium dioxide support, and
ii. oxidic cobalt or a cobalt compound decomposable thereto,
with a hydrogen gas-containing stream comprising less than 10% carbon monoxide gas by volume of carbon monoxide gas and hydrogen gas, to form a reductively-activated catalyst; and
b. contacting the feed at elevated temperature and atmospheric or elevated pressure with the reductively-activated catalyst;
wherein the step of pre-treating the catalyst composition is conducted within a temperature range of from 220°C to 250°C for a period of from 7 to 20 hours, preferably from 10 to 15 hours, and wherein the catalyst composition and/or the reductively-activated catalyst comprises from 5% to 30% cobalt and from 0.5% to 2.5% of a manganese promoter by weight of the catalyst.

2. A process according to claim 1, wherein the gas hourly space velocity (GHSV) of the hydrogen gas-containing stream in step a is in the range of from 100 to 10000 h⁻¹, preferably from 250 to 5000 h⁻¹, such as from 250 to 3000 h⁻¹ and more preferably from 250 to 2000 h⁻¹.

3. A process according to Claim 1 or Claim 2, wherein step a is carried out at a feed pressure of from 10 to 5500 kPa, preferably from 20 to 3000 kPa, more preferably from 50 to 1000 kPa, and even more preferably from 100 to 800 kPa.

4. A process according to any preceding claim, wherein the mixture of hydrogen and carbon monoxide is in the form of synthesis gas, preferably wherein the synthesis gas comprises hydrogen gas and carbon monoxide gas at a ratio in the range of from 0.5:1 to 5:1 by volume, preferably in the range of from 1:1 to 3:1 by volume, more preferably in the range of from 1.6 to 2.2:1 by volume.

5. A process according to any preceding claim, wherein the catalyst composition and/or the reductively-activated catalyst comprises from 5% to 25% and more preferably from 10% to 20%, cobalt by weight of the catalyst.

6. A process according to any preceding claim, wherein the catalyst composition and/or the reductively-activated catalyst further comprises one or more promoters selected from chromium, nickel, iron, molybdenum, tungsten, boron, zirconium, gallium, thorium, lanthanum, cerium, ruthenium, rhenium, palladium, platinum, compounds and/or mixtures thereof.

7. A process according to claim 6, wherein the promoter is present in an amount of from 0% to 5%, preferably from 0.1% to 3%, and more preferably 0.5% to 2.5%, by weight of the catalyst.

8. A process according to any one of claims 1 to 5, wherein the manganese promoter is present in an amount of from 1% to 2.5% and more preferably from 1.5% to 2.25%.

9. A process according to any one of claims 1 to 5, wherein the manganese promoter is present in an amount of from 0.5% to 1.5%, more preferably from 0.75% to 1.25% and even more preferably from 0.8% to 1.2%.

10. A process according to any preceding claim, wherein the oxidic cobalt or a cobalt compound decomposable thereto is selected from cobalt(III) oxide, cobalt(II,III) oxide, cobalt(II) oxide, compounds decomposable thereto, or mixtures thereof.

11. A process for making a Fischer-Tropsch catalyst comprising the step of:
a. treating a catalyst composition comprising:
i. titanium dioxide support, and
ii. oxidic cobalt or a cobalt compound decomposable thereto,
for a period of from 7 to 20 hours, with a hydrogen gas-containing stream comprising less than 10% carbon monoxide gas by volume of carbon monoxide gas and hydrogen gas, to form the Fischer-Tropsch catalyst, wherein the step of pre-treating the catalyst composition is conducted within a temperature range of from 220°C to 250°C, and wherein the catalyst composition and/or the reductively-activated catalyst comprises from 5% to 30% cobalt and from 0.5% to 2.5% of a manganese promoter by weight of the catalyst.

## Patentansprüche

1. Verfahren zur Umwandlung eines Beschickungsmaterials, umfassend ein Gemisch aus Wasserstoff und Kohlenmonoxid, in Kohlenwasserstoffe, wobei der Wasserstoff und das Kohlenmonoxid in dem Beschickungsmaterial in einem Verhältnis von 1 : 9 bis 9 : 1, bezogen auf das Volumen, vorliegen, wobei das Verfahren die Schritte umfasst:
a. Vorbehandeln einer Katalysatorzusammensetzung, umfassend:
i. einen Titandioxidträger und
ii. oxidisches Kobalt oder eine Kobaltverbindung, die dazu zersetzbar ist,
mit einem Wasserstoffgas enthaltenden Strom, umfassend weniger als 10 % Kohlenmonoxidgas, bezogen auf das Volumen an Kohlenmonoxidgas und Wasserstoffgas, unter Bildung eines reduktiv aktivierten Katalysators; und
b. Kontaktieren des Beschickungsmaterials bei erhöhter Temperatur und atmosphärischem oder erhöhtem Druck mit dem reduktiv aktivierten Katalysator;
wobei der Schritt des Vorbehandelns der Katalysatorzusammensetzung in einem Temperaturbereich von 220 °C bis 250 °C für einen Zeitraum von 7 bis 20 Stunden, vorzugsweise 10 bis 15 Stunden durchgeführt wird, und wobei die Katalysatorzusammensetzung und/oder der reduktiv aktivierte Katalysator 5 % bis 30 % Kobalt und 0,5 % bis 2,5 % eines Manganpromotors, basierend auf dem Gewicht des Katalysators, umfassen.

2. Verfahren nach Anspruch 1, wobei die stündliche Gas-Raumgeschwindigkeit (GHSV) des Wasserstoffgas enthaltenden Stroms in Schritt a im Bereich von 100 bis 10.000 h⁻¹, vorzugsweise 250 bis 5.000 h⁻¹, wie 250 bis 3.000 h⁻¹, und stärker bevorzugt 250 bis 2.000 h⁻¹ liegt.

3. Verfahren nach Anspruch 1 oder Anspruch 2, wobei Schritt a bei einem Beschickungsdruck von 10 bis 5.500 kPa, vorzugsweise 20 bis 3.000 kPa, stärker bevorzugt 50 bis 1.000 kPa und noch stärker bevorzugt 100 bis 800 kPa durchgeführt wird.

4. Verfahren nach einem vorstehenden Anspruch, wobei das Gemisch aus Wasserstoff und Kohlenmonoxid in Form von Synthesegas vorliegt, wobei das Synthesegas vorzugsweise Wasserstoffgas und Kohlenmonoxidgas in einem Verhältnis im Bereich von 0,5 : 1 bis 5 : 1, bezogen auf das Volumen, vorzugsweise im Bereich von 1 : 1 bis 3 : 1, bezogen auf das Volumen, stärker bevorzugt im Bereich von 1,6 bis 2,2 : 1, bezogen auf das Volumen, umfasst.

5. Verfahren nach einem vorstehenden Anspruch, wobei die Katalysatorzusammensetzung und/oder der reduktiv aktivierte Katalysator 5 % bis 25 % und stärker bevorzugt 10 % bis 20 % Kobalt, basierend auf dem Gewicht des Katalysators, umfassen.

6. Verfahren nach einem vorstehenden Anspruch, wobei die Katalysatorzusammensetzung und/oder der reduktiv aktivierte Katalysator ferner einen oder mehrere Promotoren umfassen, die ausgewählt sind aus Chrom, Nickel, Eisen, Molybdän, Wolfram, Bor, Zirconium, Gallium, Thorium, Lanthan, Cer, Ruthenium, Rhenium, Palladium, Platin, Verbindungen und/oder Gemischen davon.

7. Verfahren nach Anspruch 6, wobei der Promotor in einer Menge von 0 % bis 5 %, vorzugsweise 0,1 % bis 3 % und stärker bevorzugt 0,5 % bis 2,5 %, bezogen auf das Gewicht des Katalysators, vorliegt.

8. Verfahren nach einem der Ansprüche 1 bis 5, wobei der Manganpromotor in einer Menge von 1 % bis 2,5 % und stärker bevorzugt 1,5 % bis 2,25 % vorliegt.

9. Verfahren nach einem der Ansprüche 1 bis 5, wobei der Manganpromotor in einer Menge von 0,5 % bis 1,5 %, stärker bevorzugt 0,75 % bis 1,25 % und noch stärker bevorzugt 0,8 % bis 1,2 % vorliegt.

10. Verfahren nach einem vorstehenden Anspruch, wobei das oxidische Kobalt oder eine Kobaltverbindung, die dazu zersetzbar ist, ausgewählt ist aus Kobalt(III)oxid, Kobalt(II,III)oxid, Kobalt(II)oxid, Verbindungen, die dazu zersetzbar sind, oder Gemischen davon.

11. Verfahren zur Herstellung eines Fischer-Tropsch-Katalysators, umfassend den Schritt:
a. Behandeln einer Katalysatorzusammensetzung, umfassend:
i. einen Titandioxidträger und
ii. oxidisches Kobalt oder eine Kobaltverbindung, die dazu zersetzbar ist,
für einen Zeitraum von 7 bis 20 Stunden mit einem Wasserstoffgas enthaltenden Strom, umfassend weniger als 10 % Kohlenmonoxidgas, bezogen auf das Volumen an Kohlenmonoxidgas und Wasserstoffgas, unter Bildung des Fischer-Tropsch-Katalysators, wobei der Schritt des Vorbehandelns der Katalysatorzusammensetzung in einem Temperaturbereich von 220 °C bis 250 °C durchgeführt wird, und wobei die Katalysatorzusammensetzung und/oder der reduktiv aktivierte Katalysator 5 % bis 30 % Kobalt und 0,5 % bis 2,5 % eines Manganpromotors, bezogen auf das Gewicht des Katalysators, umfassen.

## Revendications

1. Procédé de conversion d'une charge comprenant un mélange d'hydrogène et de monoxyde de carbone en hydrocarbures, l'hydrogène et le monoxyde de carbone dans la charge étant présents en un rapport de 1/9 à 9/1 en volume, le procédé comprenant les étapes de :
a. prétraitement d'une composition de catalyseur comprenant :
i. un support en dioxyde de titane, et
ii. du cobalt oxydique ou un composé de cobalt décomposable en celui-ci, avec un courant contenant de l'hydrogène gazeux comprenant moins de 10 % de monoxyde de carbone gazeux en volume de monoxyde de carbone gazeux et d'hydrogène gazeux, pour former un catalyseur activé par réduction ; et
b. mise en contact de la charge à température élevée et à pression atmosphérique ou élevée avec le catalyseur activé par réduction ;
dans lequel l'étape de prétraitement de la composition de catalyseur est effectuée à l'intérieur d'une plage de température de 220 °C à 250 °C pendant une période de 7 à 20 heures, de préférence de 10 à 15 heures, et dans lequel la composition de catalyseur et/ou le catalyseur activé par réduction comprend de 5 % à 30 % de cobalt et de 0,5 % à 2,5 % d'un promoteur de manganèse en poids du catalyseur.

2. Procédé selon la revendication 1, dans lequel la vitesse spatiale horaire du gaz (GHSV) du courant contenant de l'hydrogène gazeux dans l'étape a est dans la plage de 100 à 10 000 h⁻¹, de préférence de 250 à 5 000 h⁻¹, comme de 250 à 3 000 h⁻¹ et de manière davantage préférée de 250 à 2 000 h⁻¹.

3. Procédé selon la revendication 1 ou la revendication 2, dans lequel l'étape a est réalisée à une pression de charge de 10 à 5 500 kPa, de préférence de 20 à 3 000 kPa, de manière davantage préférée de 50 à 1 000 kPa, et de manière encore davantage préférée de 100 à 800 kPa.

4. Procédé selon une quelconque revendication précédente, dans lequel le mélange d'hydrogène et de monoxyde de carbone est sous la forme de gaz de synthèse, de préférence dans lequel le gaz de synthèse comprend de l'hydrogène gazeux et du monoxyde de carbone gazeux à un rapport dans la plage de 0,5/1 à 5/1 en volume, de préférence dans la plage de 1/1 à 3/1 en volume, de manière davantage préférée dans la plage de 1,6 à 2,2/1 en volume.

5. Procédé selon une quelconque revendication précédente, dans lequel la composition de catalyseur et/ou le catalyseur activé par réduction comprend de 5 % à 25 % et de manière davantage préférée de 10 % à 20 % de cobalt en poids du catalyseur.

6. Procédé selon une quelconque revendication précédente, dans lequel la composition de catalyseur et/ou le catalyseur activé par réduction comprend en outre un ou plusieurs promoteurs choisis parmi le chrome, le nickel, le fer, le molybdène, le tungstène, le bore, le zirconium, le gallium, le thorium, le lanthane, le cérium, le ruthénium, le rhénium, le palladium, le platine, les composés et/ou les mélanges de ceux-ci.

7. Procédé selon la revendication 6, dans lequel le promoteur est présent en une quantité de 0 % à 5 %, de préférence de 0,1 % à 3 %, et de manière davantage préférée de 0,5 % à 2,5 %, en poids du catalyseur.

8. Procédé selon l'une quelconque des revendications 1 à 5, dans lequel le promoteur de manganèse est présent en une quantité de 1 % à 2,5 % et de manière davantage préférée de 1,5 % à 2,25 %.

9. Procédé selon l'une quelconque des revendications 1 à 5, dans lequel le promoteur de manganèse est présent en une quantité de 0,5 % à 1,5 %, de manière davantage préférée de 0,75 % à 1,25 % et de manière encore davantage préférée de 0,8 % à 1,2 %.

10. Procédé selon une quelconque revendication précédente, dans lequel le cobalt oxydique ou un composé de cobalt décomposable en celui-ci est choisi parmi l'oxyde de cobalt(III), l'oxyde de cobalt(II,III), l'oxyde de cobalt(II), les composés décomposables en ceux-ci, ou les mélanges de ceux-ci.

11. Procédé de fabrication d'un catalyseur de Fischer-Tropsch comprenant l'étape de :
a. traitement d'une composition de catalyseur comprenant :
i. un support en dioxyde de titane, et
ii. du cobalt oxydique ou un composé de cobalt décomposable en celui-ci, pendant une période de 7 à 20 heures, avec un courant contenant de l'hydrogène gazeux comprenant moins de 10 % de monoxyde de carbone gazeux en volume de monoxyde de carbone gazeux et d'hydrogène gazeux, pour former le catalyseur de Fischer-Tropsch, dans lequel l'étape de prétraitement de la composition de catalyseur est effectuée à l'intérieur d'une plage de température de 220 °C à 250 °C, et dans lequel la composition de catalyseur et/ou le catalyseur activé par réduction comprend de 5 % à 30 % de cobalt et de 0,5 % à 2,5 % d'un promoteur de manganèse en poids du catalyseur.
